# EUROPEAN PATENT APPLICATION

(11) **EP 4 567 086 A1**
(43) Date of publication of application: **11.06.2025**
(21) Application number: 23850040.9
(22) Date of filing: 31.07.2023
(51) Int. Cl.: C09K 5/04, F25B 1/00

(54) **REFRIGERATION CYCLE WORKING MEDIUM AND REFRIGERATION CYCLE SYSTEM**

(30) Priority: 05.08.2022 JP 2022125723
(71) Applicant: Panasonic Intellectual Property Management Co., Ltd., Kadoma-shi, Osaka 571-0057 (JP)
(72) Inventor: MURAKAMI, Hikaru, Kadoma-shi, Osaka 571-0057 (JP); HASHIMOTO, Takahiko, Kadoma-shi, Osaka 571-0057 (JP); KITAGAWA, Hirotaka, Kadoma-shi, Osaka 571-0057 (JP); NAKANO, Yukio, Koganei-shi, Tokyo 184-8501 (JP)
(74) Representative: Eisenführ Speiser
(86) International application number: PCT/JP2023/027936
(87) International publication number: WO 2024/029485

(57) **Abstract**

A working medium for a refrigeration cycle includes: as a refrigerant component, fluoroolefin that causes a disproportionation reaction; and as a disproportionation inhibitor that suppresses the disproportionation reaction of the fluoroolefin, fluoroalkane (except for difluoromethane) having a boiling point of 0°C or less and a carbon number of 1 to 3. The working medium for the refrigeration cycle may further include difluoromethane (R32) as the refrigerant component. The working medium for the refrigeration cycle may further include, as the disproportionation inhibitor, haloalkane that has the carbon number of 1 or 2 and is not a compound in which all halogen atoms are fluorine. Thus, the combustibility of the working medium for the refrigeration cycle which includes the fluoroolefin as the refrigerant component and also includes the disproportionation inhibitor can be satisfactorily suppressed.

## Description

### Technical Field

The present invention relates to a working medium for a refrigeration cycle which can effectively suppress or weaken a disproportionation reaction of fluoroolefin (fluoroalkene), such as 1,1,2-trifluoroethylene, and a refrigeration cycle system that uses the working medium.

### Background Art

As a working medium (a refrigerant or a heat medium) for a refrigeration cycle, HCFC (hydrochlorofluorocarbon) has been used. However, the HCFC largely influences ozone layer depletion. Therefore, in recent years, HFC (hydrofluorocarbon) having an ozone depletion potential (ODP) of 0 is used. Among such HFCs, the use of fluoroolefin having a lower global warming potential (GWP), especially hydrofluoroolefin (HFO), has been recently proposed.

Known as representative HFOs are, for example, 1,1,2-trifluoroethylene (HFO1123) and difluoroethylene (HFO1132). These HFOs are lower in stability than the conventional HFCs and the like. Therefore, the HFOs hardly remain in the atmosphere, and thus, has a low ODP and a low GWP. However, it is also known that since the stability of the HFO is low, a self-polymerization reaction which is called a disproportionation reaction tends to occur (such reaction is hereinafter referred to as the disproportionation reaction).

The disproportionation reaction tends to occur by being induced by, for example, heat generated during the use of the working medium for the refrigeration cycle. In addition, it is also known that since large heat dissipation is caused by the occurrence of the disproportionation reaction, the disproportionation reactions occur successively. As a result, a large amount of soot is generated, and this may deteriorate the reliability of a refrigeration cycle system or the reliability of a compressor and the like constituting the refrigeration cycle system.

Therefore, when, for example, the 1,1,2-trifluoroethylene is used as a refrigerant component of the working medium for the refrigeration cycle, the present applicant propose, as a component (disproportionation inhibitor) that suppresses the disproportionation reaction of the 1,1,2-trifluoroethylene, halomethane (PTL 1), saturated hydrocarbon (PTL 2), haloethane (PTL 3), a combination of these (PTL 4 or 5), or difluoroiodomethane (PTL 6) as a representative example of the especially suitable disproportionation inhibitor.

As the refrigerant component that can be used together with the 1,1,2-trifluoroethylene, difluoromethane (HFC32, R32) is also known (R32 is a refrigerant number based on Standard 34 of American Society of Heating, Refrigerating and Air-Conditioning Engineers (ASHRAE)). For example, PTLs 1 to 4 disclose that a main refrigerant component is the 1,1,2-trifluoroethylene, but the difluoromethane can be used together. PTLs 5 and 6 disclose that the 1,1,2-trifluoroethylene (or fluoroolefin) and the difluoromethane are used together as the refrigerant components.

### Citation List

### Patent Literature

PTL 1: Japanese Laid-Open Patent Application Publication No. 2017-145380
PTL 2: Japanese Laid-Open Patent Application Publication No. 2018-048271
PTL 3: Japanese Laid-Open Patent Application Publication No. 2018-104565
PTL 4: Japanese Laid-Open Patent Application Publication No. 2018-104566
PTL 5: Japanese Laid-Open Patent Application Publication No. 2019-034983
PTL 6: Japanese Laid-Open Patent Application Publication No. 2021-161316

### Summary of Invention

### Technical Problem

The above-described disproportionation inhibitor can effectively suppress or weaken the disproportionation reaction of the fluoroolefin, such as the 1,1,2-trifluoroethylene. Moreover, even when the difluoromethane is used together as the refrigerant component, the above-described disproportionation inhibitor can effectively suppress or weaken the disproportionation reaction of the fluoroolefin.

In the field of the working medium for the refrigeration cycle, generally, when considering the use of a compound that can further lower the GWP, the combustibility of the working medium for the refrigeration cycle cannot be adequately suppressed in some cases. For example, each of the working mediums for the refrigeration cycle which are disclosed in PTLs 2 and 4 to 6 has such a composition that saturated hydrocarbon, such as propane, may be used as the disproportionation inhibitor, or the saturated hydrocarbon may be used together with another disproportionation inhibitor. However, the saturated hydrocarbon has high combustibility.

Therefore, for example, when the disproportionation inhibitor that is lower in combustibility than the saturated hydrocarbon can be used, the combustibility of the working medium for the refrigeration cycle can be more satisfactorily suppressed.

The present invention was made to solve the above problems, and an object of the present disclosure is to be able to satisfactorily suppress the combustibility of a working medium for a refrigeration cycle which includes fluoroolefin as a refrigerant component and also includes a disproportionation inhibitor.

### Solution to Problem

The present inventors have diligently studied to solve the above problems. As a result, although fluoroalkane has been regarded as inappropriate as the disproportionation inhibitor, the present inventors have uniquely found that the fluoroalkane can effectively suppress the disproportionation reaction of the fluoroolefin, and in addition, an increase in combustion speed of the obtained working medium for the refrigeration cycle is suppressed, and the combustibility of the working medium can be satisfactorily suppressed. Thus, the present invention has been made.

To be specific, to solve the above problems, a working medium for a refrigeration cycle according to the present disclosure includes: as a refrigerant component, fluoroolefin that causes a disproportionation reaction; and as a disproportionation inhibitor that suppresses the disproportionation reaction of the fluoroolefin, fluoroalkane (except for difluoromethane) having a boiling point of 0°C or less and a carbon number of 1 to 3.

According to the above configuration, the working medium for the refrigeration cycle which includes the fluoroolefin that causes the disproportionation reaction includes, as the disproportionation inhibitor, the fluoroalkane having the boiling point of 0°C or less and the carbon number of 1 to 3. Such fluoroalkane has been conventionally regarded as inappropriate as the disproportionation inhibitor. However, the fluoroalkane can achieve a satisfactory disproportionation suppressing effect similar to that of saturated hydrocarbon, such as propane. Moreover, the combustibility of the fluoroalkane is lower than that of the saturated hydrocarbon, and in addition, the combustion speed of the fluoroalkane is lower than that of the saturated hydrocarbon. Therefore, the combustibility of the obtained working medium for the refrigeration cycle can be satisfactorily suppressed.

Moreover, the present disclosure includes a refrigeration cycle system configured by using the above working medium for the refrigeration cycle.

The above object, other objects, features, and advantages of the present invention will be made clear by the following detailed description of preferred embodiments with reference to the attached drawings.

### Advantageous Effects of Invention

By the above configuration, the present invention can obtain an effect of being able to satisfactorily suppress the combustibility of the working medium for the refrigeration cycle which includes the fluoroolefin as the refrigerant component and also includes the disproportionation inhibitor.

### Brief Description of Drawings

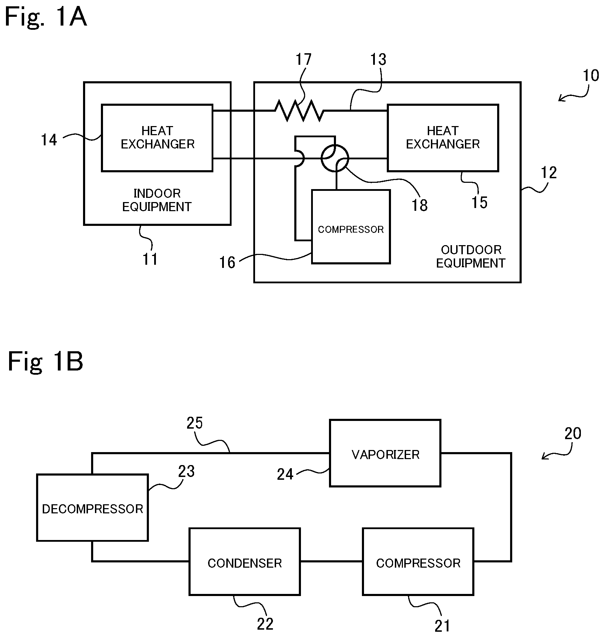

FIGS. 1A and 1B are schematic block diagrams each showing one example of a refrigeration cycle system according to one embodiment of the present disclosure.

### Description of Embodiments

A working medium for a refrigeration cycle according to the present disclosure includes: as a refrigerant component, fluoroolefin that causes a disproportionation reaction; and as a disproportionation inhibitor that suppresses the disproportionation reaction of the fluoroolefin, fluoroalkane (except for difluoromethane) having a boiling point of 0°C or less and a carbon number of 1 to 3.

According to the above configuration, the working medium for the refrigeration cycle which includes the fluoroolefin that causes the disproportionation reaction includes, as the disproportionation inhibitor, the fluoroalkane having the boiling point of 0°C or less and the carbon number of 1 to 3. Such fluoroalkane has been conventionally regarded as inappropriate as the disproportionation inhibitor. However, the fluoroalkane can achieve a satisfactory disproportionation suppressing effect similar to that of saturated hydrocarbon, such as propane. Moreover, the combustibility of the fluoroalkane is lower than that of the saturated hydrocarbon, and in addition, the combustion speed of the fluoroalkane is lower than that of the saturated hydrocarbon. Therefore, the combustibility of the obtained working medium for the refrigeration cycle can be satisfactorily suppressed.

In the above working medium for the refrigeration cycle, the fluoroalkane may include at least one of fluoroethane having the carbon number of 2 and fluoropropane having the carbon number of 3. The above working medium for the refrigeration cycle may further include difluoromethane (R32) as the refrigerant component. The above working medium for the refrigeration cycle may further include, as the disproportionation inhibitor, haloalkane that has the carbon number of 1 or 2 and is not a compound in which all halogen atoms are fluorine.

In the above working medium for the refrigeration cycle, when the sum of the amount of refrigerant component and the amount of disproportionation inhibitor is regarded as 100 mass %, for example, the content of the fluoroalkane may be 30 mass % or less. When the above working medium for the refrigeration cycle includes the difluoromethane, the content of the difluoromethane may be 30 mass % or less. When the above working medium for the refrigeration cycle includes the haloalkane, the content of the haloalkane may be 10 mass % or less.

In the above working medium for the refrigeration cycle, the fluoroolefin that causes the disproportionation reaction may be 1,1,2-trifluoroethylene or difluoroethylene, and the fluoroalkane may be fluoropropane. Moreover, when the above working medium for the refrigeration cycle includes the haloalkane, the haloalkane may include at least one of difluoroiodomethane, 1,1,1-trifluoro-2-iodoethane, and trifluoroiodomethane.

Hereinafter, a representative embodiment of a working medium for a refrigeration cycle according to the present disclosure, a representative method of using the working medium, and the like will be specifically described.

### Refrigerant Component

In the working medium for the refrigeration cycle according to the present disclosure, at least the fluoroolefin (fluoroalkene) that causes the disproportionation reaction is used as the refrigerant component.

Specific examples of the fluoroolefin that causes the disproportionation reaction include 1,1,2-trifluoroethylene (CF₂=CHF,HFO1123), trans-1,2-difluoroethylene (CHF=CHF(E),HFO1132(E)), cis-1,2-difluoroethylene (CHF=CHF(Z),HFO1132(Z)), 1,1-difluoroethylene (CF₂=CH₂,HFO1132a), and tetrafluoroethylene (CF₂=CF₂,FO1114). However, the fluoroolefin that causes the disproportionation reaction is not especially limited. Only one type of fluoroolefin may be used as the refrigerant component, or a combination of two or more types of fluoroolefins may be used as the refrigerant component.

The fluoroolefin includes an ethylene structure as a skeleton, i.e., a double bond between a carbon atom and a carbon atom, and includes such a chemical structure that at least one of two hydrogen atoms bonded to one of the carbon atoms is replaced with a fluorine atom, or at least one of two hydrogen atoms bonded to both of the carbon atoms is replaced with a fluorine atom. In the fluoroolefin, at least one of the hydrogen atoms may be replaced with another atom or another substituent.

For example, the 1,1,2-trifluoroethylene includes such a structure that both of two hydrogen atoms bonded to one of the carbon atoms (i.e., the carbon atom at a first position) of the ethylene structure are replaced with fluorine atoms, and one of two hydrogen atoms bonded to the other carbon atom (i.e., the carbon atom at a second position) is replaced with a fluorine atom.

Or, the trans-1,2-difluoroethylene has such a structure that: one of two hydrogen atoms bonded to the carbon atom at the first position in the ethylene structure is replaced with a fluorine atom; and between two hydrogen atoms bonded to the carbon atom at the second position, only the hydrogen atom at a position which is not adjacent to the carbon atom at the first position but is opposed to the carbon atom at the first position across the double bond is replaced with a fluorine atom.

Since such fluoroolefin includes the ethylene skeleton, i.e., the carbon-carbon double bond as described above, the double bond is easily decomposed. To be specific, ozone in the atmosphere generates hydroxyl radicals (OH radicals) by a photochemical reaction. However, since the hydroxyl radicals can cause an addition reaction with respect to the double bond, the fluoroolefin is easily decomposed. Therefore, the fluoroolefin is less likely to influence ozone layer depletion and global warming.

The working medium for the refrigeration cycle according to the present disclosure may include, as the refrigerant component, difluoromethane (HFC32, R32, chemical formula: CH₂F₂) in addition to the fluoroolefin. In this case, the fluoroolefin is regarded as a "main component (main refrigerant component)" of the refrigerant component in the working medium for the refrigeration cycle according to the present disclosure, and the difluoromethane is regarded as a "subcomponent (sub-refrigerant component)" of the refrigerant component in the working medium for the refrigeration cycle according to the present disclosure.

As described above, the difluoromethane has an ozone depletion potential (ODP) of zero and has a more satisfactory refrigerant performance than HCFC (hydrochlorofluorocarbon) that has been used before.

Moreover, the working medium for the refrigeration cycle according to the present disclosure may include, as the refrigerant component, "another refrigerant component" in addition to the fluoroolefin as the main refrigerant component and the difluoromethane as the sub-refrigerant component. Representative examples of the another refrigerant component include: hydrofluorocarbons (HFCs), such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs), such as monofluoropropene, trifluoropropene, tetrafluoropropene, pentafluoropropene, and hexafluorobutene. However, the another refrigerant component is not especially limited.

These HFCs and HFOs are known as being less likely to influence the ozone layer depletion and the global warming. Therefore, each of the HFC and the HFO can be used as the refrigerant component together with the fluoroolefin or together with the fluoroolefin and the difluoromethane. Only one type of above-described another refrigerant component may be used together, or a suitable combination of two or more types of above-described another refrigerant component may be used together.

It is also known that the fluoroolefin causes a rapid disproportionation reaction by the above-described satisfactory decomposing property. As one representative example of the fluoroolefin, 1,1,2-trifluoroethylene will be described. In this disproportionation reaction, a self-decomposition reaction in which molecules of the 1,1,2-trifluoroethylene are decomposed occurs, and after this self-decomposition reaction, for example, a polymerization reaction in which carbons generated by the decomposition polymerize to become soot occurs. When active radicals are generated by heat generation or the like in a high-temperature high-pressure state, the active radicals and the 1, 1,2-trifluoroethylene react with each other to cause the above-described disproportionation reaction. Since this disproportionation reaction generates heat, the active radicals are generated by this heat generation, and the disproportionation reaction is induced by the active radicals. As above, since the generation of the active radicals and the occurrence of the disproportionation reaction are caused successively, the disproportionation reaction rapidly proceeds.

Previously, the present applicants have diligently studied and found that the active radicals that induce the disproportionation reaction of the 1,1,2-trifluoroethylene mainly include fluorine radicals (F radicals) and also include radicals, such as trifluoromethyl radicals (CF₃ radicals) and difluoromethylene radicals (CF₂ radicals).

Therefore, the present applicants have tried to, under a condition that the difluoromethane is used as the refrigerant component together with the fluoroolefin, such as the 1,1,2-trifluoroethylene, which causes the disproportionation reaction, suppress or weaken the rapid disproportionation reaction by adding a substance (disproportionation inhibitor), which can efficiently capture the F radicals, the CF₃ radicals, the CF₂ radicals, and the like, to the working medium for the refrigeration cycle. As a result, the present applicants have uniquely found that suitable disproportionation inhibitors may be obtained by adding the disproportionation inhibitors disclosed in PTLs 1 to 6.

As described in PTL 1 (paragraph [0040], for example), PTL 3 (paragraph [0042], for example]), PTL 4 (paragraphs [0051] and [0058], for example), PTL 5 (paragraph [0049], for example]), etc., in the haloalkane (halomethane, haloethane, or the like) disclosed as the disproportionation inhibitor, a compound in which all of halogen atoms (X) to be replaced are constituted by only fluorine atoms (F) has been regarded as inappropriate, i.e., the fluoroalkane has been regarded as inappropriate.

As described above, it was found that the active radicals that induce the disproportionation reaction were radicals including fluorine. On the other hand, a compound that has an effective function as the disproportionation inhibitor was saturated hydrocarbon (alkane) or haloalkane including halogen atoms that are not fluorine. This was because it was thought that when the halogen atoms to be replaced were only the fluorine atoms (the halogen atoms X were only the fluorine atoms F), such compound did not substantially function as the disproportionation inhibitor but functioned in the same manner as the above-described another refrigerant component.

However, the present inventors have further studied and newly found that fluoroalkane having the boiling point of 0°C or less and the carbon number of 1 to 3 can effectively suppress the disproportionation reaction of the fluoroolefin.

### Disproportionation Inhibitor

The working medium for the refrigeration cycle according to the present disclosure includes the fluoroalkane having the boiling point of 0°C or less and the carbon number of 1 to 3, as the disproportionation inhibitor that suppresses the disproportionation reaction of the fluoroolefin that is the main refrigerant component. It can be said that the fluoroalkane having the carbon number of 1 to 3 is such a compound that at least one of hydrogen atoms included in alkane having the carbon number of 1 to 3 is replaced with fluorine.

Specific examples of such fluoroalkane include: fluoromethanes, such as fluoromethane (boiling point of -78.2°C), difluoromethane (boiling point of -51.6°C), trifluoromethane (boiling point of -84.4°C), and tetrafluoromethane (boiling point of -127.8°C); fluoroethanes, such as fluoroethane (boiling point of -37.1°C), 1,1-difluoroethane (boiling point of -24.7°C), 1,1,1-trifluoroethane (boiling point of -47.2°C), 1,1,1,2-tetrafluoroethane (boiling point of -26.3°C), and 1,1,1,2,2- pentafluoroethane (boiling point of -48.5°C); and fluoropropanes, such as 1-fluoropropane (boiling point of -2.5°C), 2-fluoropropane (boiling point of -10.0°C), 2,2-difluoropropane (boiling point of -1.0°C), 1,1,1-trifluoropropane (boiling point of -12.0°C), 1, 1,2,2-tetrafluoropropane (boiling point of -0.8°C), and 1,1,1,3,3,3-hexafluoropropane (boiling point of -1.4°C). Only one type of fluoroalkane may be used as the disproportionation inhibitor, or a combination of two or more types of fluoroalkanes may be used as the disproportionation inhibitor.

An especially representative compound among these fluoroalkanes is fluoroalkane having the carbon number of 2 or 3, i.e., fluoroethane (the carbon number of 2) or fluoropropane (the carbon number of 3). An especially representative fluoroalkane among these is fluoropropane used in Examples described below.

In the present disclosure, the fluoroethane that can be used as the disproportionation inhibitor is such a compound that one or more of hydrogen atoms of ethane that is alkane having the carbon number of 2 are replaced with fluorine atoms, and the boiling point may be 0°C or less. Similarly, in the present disclosure, the fluoropropane that can be used as the disproportionation inhibitor is such a compound that one or more of hydrogen atoms of propane that is alkane having the carbon number of 3 are replaced with fluorine atoms, and the boiling point may be 0°C or less.

Examples below describe 1-fluoropropane or 2-fluoropropane (a compound in which one of hydrogen atoms of propane is replaced with fluorine). However, needless to say, the specific fluoropropane that can be used as the disproportionation inhibitor in the present disclosure is not limited to these. Similarly, the fluoroethane that can be used as the disproportionation inhibitor in the present disclosure is not especially limited.

Moreover, as described above, in the present disclosure, only the fluoroethane, only the fluoropropane, or a combination of the fluoroethane and the fluoropropane may be used as the disproportionation inhibitor. When only the fluoroethane or only the fluoropropane is used as the disproportionation inhibitor, for example, two or more types of fluoroethanes or two or more types of fluoropropanes may be used. Similarly, when the combination of the fluoroethane and the fluoropropane is used, only one type of fluoroethane and only one type of fluoropropane may be used, or at least one of the fluoroethane and fluoropropane may be of two or more types. The same is true when fluoromethane having the carbon number of 1 is used together as the disproportionation inhibitor.

In the present disclosure, the fluoroalkane having the carbon number of 1 to 3 is used as the working medium for the refrigeration cycle together with the fluoroolefin that is the main refrigerant component. The working medium for the refrigeration cycle which includes the refrigerant component and the disproportionation inhibitor is basically a gas in a normal temperature range, and therefore, the boiling point needs to be 0°C or less.

For example, since each of the boiling points of 1,2-difluoroethane (boiling point of 31°C), 1, 1,2-trifluoroethane (boiling point of 5°C), 1,3-difluoropropane (boiling point of 40°C to 42°C), 1,1,1,3,3-pentafluoropropane (boiling point of 15.3°C), 1,1,2,2,3-pentafluoropropane (boiling point of 25°C to 26°C), and the like exceeds 0°C, these cannot be used as the disproportionation inhibitor in the working medium for the refrigeration cycle according to the present disclosure.

Moreover, in the present disclosure, difluoromethane is not included in the fluoroalkane having the carbon number of 1 to 3. The boiling point of the difluoromethane is -51.7°C, and therefore, the difluoromethane corresponds to fluoroalkane having the carbon number of 1, i.e., fluoromethane. However, as described above, since the difluoromethane is the sub-refrigerant component that is used together with the fluoroolefin that is the main refrigerant component, the difluoromethane is excluded from the "fluoroalkane having the carbon number of 1 to 3" as the disproportionation inhibitor in the present disclosure.

In addition, for example, as is clear from the results of Comparative Examples in PTLs 4 and 5, it is thought that the difluoromethane that is the sub-refrigerant component does not have an effect of suppressing the disproportionation reaction of the fluoroolefin, such as 1,1,2-trifluoroethylene. From this point of view, the difluoromethane is excluded from the "fluoroalkane having the carbon number of 1 to 3" as the disproportionation inhibitor.

In a conventional working medium for a refrigeration cycle, saturated hydrocarbon, such as propane, is used as the disproportionation inhibitor, or below-described haloalkane (except for fluoroalkane) having the carbon number of 1 to 2 is used as the disproportionation inhibitor. When the saturated hydrocarbon is used as the disproportionation inhibitor, the disproportionation reaction of the fluoroolefin can be satisfactorily suppressed. However, since the content of the saturated hydrocarbon having high combustibility is large, the combustibility of the working medium for the refrigeration cycle becomes high. High combustibility largely influences the practical use of the working medium for the refrigeration cycle.

On the other hand, when the haloalkane having the carbon number of 1 to 2 is used as the disproportionation inhibitor instead of the saturated hydrocarbon, the disproportionation reaction of the fluoroolefin can be satisfactorily suppressed, and the combustibility of the working medium for the refrigeration cycle can be prevented from becoming high. However, it has been found that when the haloalkane and the saturated hydrocarbon are used in combination, the performance of the working medium for the refrigeration cycle as the refrigerant can be made more satisfactory than that when only the haloalkane is used (PTL 6, for example).

As a result of study regarding the disproportionation inhibitor that may be used instead of the saturated hydrocarbon, for example, haloalkane having the carbon number of 3 is assumed to be used instead of propane that is a representative example of the saturated hydrocarbon. Since such haloalkane includes a chlorine atom (Cl) or a bromine atom (Br), the combustibility lowers. However, since a halogen atom is included, the boiling point of the haloalkane exceeds 0°C. Therefore, the disproportionation inhibitor as a gas cannot be added to the refrigerant component.

On the other hand, in the present disclosure, it has been found that when the fluoroalkane (the halogen atoms to be replaced are only the fluorine atoms (F)) that has been regarded as inappropriate as the disproportionation inhibitor is used, the disproportionation reaction of the fluoroolefin can be satisfactorily suppressed, and the performance of the working medium for the refrigeration cycle as the refrigerant can be made further satisfactory.

Moreover, it has also been found that when fluoroalkane having the carbon number of 1 to 3 is used as the disproportionation inhibitor, the combustion speed of the working medium for the refrigeration cycle can be satisfactorily suppressed. The combustion speed is defined as the speed of a flame front relative to an uncombusted fuel-air mixture. High combustion speed denotes that once the working medium is ignited, the combustion easily spreads. Regarding the working medium for the refrigeration cycle which includes the fluoroolefin as the main refrigerant component and also includes the disproportionation inhibitor, the combustibility as a whole has been attracting attention, but the combustion speed has not been attracting attention. Therefore, in the present disclosure, by using the fluoroalkane as the disproportionation inhibitor, the combustion speed of the working medium for the refrigeration cycle can be satisfactorily adjusted.

In the present disclosure, in addition to the fluoroalkane having the boiling point of 0°C or less and the carbon number of 1 to 3, haloalkane that has the carbon number of 1 or 2 and is not a compound (fluoroalkane) in which all the halogen atoms are fluorine can be used together as the disproportionation inhibitor. By using these disproportionation inhibitors together, the disproportionation reaction can be suppressed or delayed even when the amount of disproportionation inhibitors is smaller.

For convenience of explanation, when the fluoroalkane having the carbon number of 1 to 3 is used as a "main component (main disproportionation inhibitor)" of the disproportionation inhibitor, the haloalkane that has the carbon number of 1 or 2 and is not the fluoroalkane can be used as a "subcomponent (sub-disproportionation inhibitor)" of the disproportionation inhibitor. Moreover, in the following description, for convenience sake, the haloalkane that has the carbon number of 1 or 2 and is not the fluoroalkane is simply referred to as "haloalkane."

The haloalkane used as the sub-disproportionation inhibitor in the present disclosure may have the carbon number of 1 or 2 and be not a compound (fluoroalkane) in which all the halogen atoms are fluorine. More specifically, examples of the haloalkane used as the sub-disproportionation inhibitor in the present disclosure include: haloalkane having the carbon number of 2, i.e., haloethane (halogenated ethane); and haloalkane having the carbon number of 1, i.e., halomethane (halogenated methane). As the disproportionation inhibitor, the haloethane or the halomethane may be used together with the above-described saturated hydrocarbon. However, both of the haloethane and the halomethane may be used together.

Specifically, the haloethane among the haloalkanes used as the sub-disproportionation inhibitor may have a structure represented by Formula (1) below.

C₂HₘXₙ ... (1)

In Formula (1), X denotes halogen atoms selected from the group consisting of fluorine (F), chlorine (Cl), bromine (Br), and iodine (I), m is an integer of 0 or more, n is an integer of 1 or more, and the sum of m and n is 6. When n is 2 or more, the halogen atoms X are the same in type as each other or different in type from each other.

To be specific, the haloethane represented by Formula (1) may be at least one of monohaloethane represented by Formula (11) below, dihaloethane represented by Formula (12) below, trihaloethane represented by Formula (13) below, tetrahaloethane represented by Formula (14) below, pentahaloethane represented by Formula (15) below, hexahaloethane represented by Formula (16) below.

Each of X¹, X², X³, X⁴, X⁵, and X⁶ in the haloethanes represented by Formulas (11) to (16) denotes one independent halogen atom. Therefore, X¹ to X⁶ may be halogen atoms that are different in type from each other, may be halogen atoms among which at least two halogen atoms are the same in type as each other, and the other halogen atoms are different in type, or may be halogen atoms that are the same in type as each other.

CH₂X¹CH₃ ... (11)

CHX¹X²CH₃ ... (12)

CX¹X²X³CH₃ ... (13)

CX¹X²X³CH₂X⁴ ... (14)

CX¹X²X³CHX⁴X⁵ ... (15)

CX¹X²X³CX⁴X⁵X⁶ ... (16)

It should be noted that a compound in which the halogen atoms X are constituted only by the fluorine F is excluded from the haloethane represented by Formula (1). This is because the haloethane in which the halogen atoms X are constituted only by the fluorine F corresponds to the fluoroalkane having the carbon number of 1 to 3 (fluoroalkane having the carbon number of 2, i.e., fluoroethane) which is used as the main disproportionation inhibitor in the present disclosure.

As described above, in the haloethane represented by Formula (1), the halogen atoms X may be at least one of F, Cl, Br, and I (except for a case where the halogen atoms X are constituted only by the fluorine F). Among these, it is preferable that the halogen atoms X be F and I, or the halogen atoms X be I. When the haloethane represented by Formula (1) includes Cl and/or Br, the ozone depletion potential (ODP) tends to become high. Therefore, there is a possibility that availability or handleability is limited. Moreover, regardless of the types of the halogen atoms X, the haloethane represented by Formula (1) includes a compound having a relatively high ozone depletion potential (ODP) and/or a relatively high global warming potential (GWP).

However, as described below, in the working medium for the refrigeration cycle according to the present disclosure, the main disproportionation inhibitor is the fluoroalkane having the carbon number of 1 to 3, and the amount of haloethane added as the sub-disproportionation inhibitor is relatively small. Even when a plural types of disproportionation inhibitors are used together, the entire amount of disproportionation inhibitors is adequately smaller than the amount of refrigerant component. Therefore, even when the haloethane having a relatively high ODP or a relatively high GWP is used, the haloethane does not significantly influence environment.

The specific haloethane represented by Formula (1) is not especially limited. Examples of the haloethane represented by Formula (1) include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). Only one type of haloethane may be used, or a suitable combination of two or more types of haloethanes may be used. Among these, in consideration of the availability, the value of the ODP, the handleability, and the like, the 1,1,1-trifluoro-2-iodoethane (CF₃CH₂I) can be especially preferably used.

Specifically, the halomethane among the haloalkanes used as the sub-disproportionation inhibitor may have a structure represented by Formula (2) below.

CHₚX_{q} ... (2)

In Formula (2), X denotes halogen atoms selected from the group consisting of F, Cl, Br, and I, p is an integer of 0 or more, q is an integer of 1 or more, and the sum of p and q is 4. When q is 2 or more, X denotes halogen atoms that are the same in type as each other or different in type from each other.

To be specific, the halomethane represented by Formula (2) may be at least one of monohalomethane represented by Formula (21) below, dihalomethane represented by Formula (22) below, trihalomethane represented by Formula (23) below, and tetrahalomethane represented by Formula (24) below. Each of X¹, X², X³, and X⁴ in the halomethanes represented by Formulas (21) to (24) denotes one independent halogen atom as with the above-described haloethane. Therefore, X¹ to X⁴ may be halogen atoms that are different in type from each other, may be halogen atoms among which at least two halogen atoms are the same in type as each other, and the other halogen atoms are different in type, or may be halogen atoms that are the same in type as each other.

CH₃X¹ ... (21)

CH₂X¹X² ... (22)

CHX¹X²X³ ... (23)

CX¹X²X³X⁴ ... (24)

It should be noted that a compound in which the halogen atoms X are constituted only by the fluorine F is excluded from the halomethane represented by Formula (2). This is because the halomethane in which the halogen atoms X are constituted only by the fluorine F corresponds to the fluoroalkane having the carbon number of 1 to 3 (fluoroalkane having the carbon number of 1, i.e., fluoromethane) which is used as the main disproportionation inhibitor in the present disclosure.

Specific examples of the halomethane represented by Formula (2) include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), difluoroiodomethane (CHF₂ I), fluorodiiodomethane (CHFI₂), difluorodiiodomethane (CF₂I₂), dibromodifluoromethane (CBr₂F₂), and trifluoroiodomethane (CF₃I). However, the halomethane represented by Formula (2) is not especially limited. Only one type of halomethane may be used, or a suitable combination of two or more types of halomethanes may be used.

Among these, a more preferable halomethane is, for example, a compound in which the halogen atoms X include bromine, and examples of a more preferable halomethane include dibromomethane (CH₂Br₂), bromomethane (CH₃Br), dibromodichloromethane (CBr₂Cl₂), difluoroiodomethane (CHF₂ I), and trifluoroiodomethane (CF₃I). An especially preferable halomethane is difluoroiodomethane (CHF₂ I).

### Content of Disproportionation Inhibitor

Next, the content of the above-described disproportionation inhibitor (the amount of above-described disproportionation inhibitor added) will be specifically described. As described above, in the working medium for the refrigeration cycle according to the present disclosure, the fluoroalkane having the boiling point of 0°C or more and the carbon number of 1 to 3 is used as the main disproportionation inhibitor, and the haloalkane (except for fluoroalkane) having the carbon number of 1 or 2 can be used together as the sub-disproportionation inhibitor.

For convenience sake, the sum of the amount of refrigerant component and the amount of disproportionation inhibitor is referred to as a "refrigerant related component total amount." When this refrigerant related component total amount is regarded as 100 mass %, an upper limit of the amount of disproportionation inhibitor added (an upper limit of the content of the disproportionation inhibitor) is not especially limited but may be 40 mass % or less of the refrigerant related component total amount, 30 mass % or less of the refrigerant related component total amount, 20 mass % or less of the refrigerant related component total amount, or 15 mass % or less of the refrigerant related component total amount.

This is because there is a possibility that when the content of the disproportionation inhibitor exceeds 40 mass % of the refrigerant related component total amount, the content of the disproportionation inhibitor in the working medium for the refrigeration cycle is too large, and the working medium for the refrigeration cycle cannot achieve a satisfactory physical property as the "refrigerant." Needless to say, the content of the disproportionation inhibitor may be 40 mass % or more of the refrigerant related component total amount depending on the composition of the working medium for the refrigeration cycle.

When only the fluoroalkane that is the main disproportionation inhibitor is used as the disproportionation inhibitor (which includes a case where two or more types of fluoroalkanes are used together), the content of the fluoroalkane is not especially limited but may be 30 mass % or less of the refrigerant related component total amount, 20 mass % or less of the refrigerant related component total amount, or 10 mass % or less of the refrigerant related component total amount.

Basically, as the content of the fluoroalkane increases, the effect of suppressing the disproportionation reaction of the fluoroolefin is obtained more easily. However, as described above, there is a possibility that when the content of the disproportionation inhibitor is too large, the working medium for the refrigeration cycle cannot achieve a satisfactory physical property as the "refrigerant." On the other hand, when the content of the fluoroalkane is 30 mass %, both of the effect of suppressing the disproportionation reaction of the the fluoroolefin and the satisfactory physical property (the performance as the refrigerant) of the working medium for the refrigeration cycle can be obtained.

Although it depends on conditions, even when the working medium for the refrigeration cycle is subjected to a high-temperature high-pressure condition in a case where the content of the fluoroalkane is 20 mass % or less or 15 mass % or less, the disproportionation reaction of the fluoroolefin can be satisfactorily suppressed by a relatively small amount of fluoroalkane. In addition, when the content of the fluoroalkane is 20 mass % or less or 15 mass % or less, the content of the disproportionation inhibitor can be reduced as a whole, and therefore, the performance of the working medium for the refrigeration cycle as the refrigerant can be made more satisfactory.

Moreover, although it depends on conditions, when the content of the fluoroalkane is 10 mass % or less, the disproportionation reaction of the fluoroolefin can be satisfactorily suppressed by a smaller amount of fluoroalkane, and the performance of the working medium for the refrigeration cycle as the refrigerant can be made further satisfactory. In addition, the combustibility of the working medium for the refrigeration cycle can be made further low.

When, as the disproportionation inhibitor, the haloalkane as the sub-disproportionation inhibitor is used together with the fluoroalkane that is the main disproportionation inhibitor, the content of the haloalkane is not especially limited but may be 10 mass % or less of the refrigerant related component total amount, 5 mass % or less of the refrigerant related component total amount, 3 mass % or less of the refrigerant related component total amount, or 1 mass % or less of the refrigerant related component total amount.

As with the fluoroalkane, basically, as the content of the haloalkane increases, the effect of suppressing the disproportionation reaction of the fluoroolefin is obtained more easily. However, as described above, there is a possibility that when the content of the disproportionation inhibitor is too large, the working medium for the refrigeration cycle cannot achieve the satisfactory physical property as the "refrigerant."

Although it depends on conditions, even when the working medium for the refrigeration cycle is subjected to a high-temperature high-pressure condition in a case where the content of the haloalkane is 5 mass % or less or 3 mass % or less, the disproportionation reaction of the fluoroolefin can be satisfactorily suppressed by a relatively small amount of haloalkane. In addition, when the content of the haloalkane is 5 mass % or less or 3 mass % or less, the content of the disproportionation inhibitor can be reduced as a whole, and therefore, the performance of the working medium for the refrigeration cycle as the refrigerant can be made more satisfactory.

Although it depends on conditions, even when the working medium for the refrigeration cycle is subjected to a high-temperature high-pressure condition in a case where the content of the haloalkane is 1 mass % or less, especially in a case where the haloalkane is combined with the fluoroalkane, the disproportionation reaction of the fluoroolefin can be satisfactorily suppressed by a relatively small amount of haloalkane. Moreover, when the content of the haloalkane is 1 mass % or less, the content of the disproportionation inhibitor can be reduced as a whole, and therefore, the performance of the working medium for the refrigeration cycle as the refrigerant can be made more satisfactory.

When the fluoroalkane that is the main disproportionation inhibitor and the haloalkane that is the sub-disproportionation inhibitor are used together as the disproportionation inhibitor, a mixing ratio of the fluoroalkane and the haloalkane is not especially limited, and the above-described upper limit of the content is applicable. As described above, when the refrigerant related component total amount is regarded as 100 mass %, one example of a preferable content as the total amount of the disproportionation inhibitor is 40 mass % or less. Therefore, the fluoroalkane and the haloalkane may be used together at an appropriate mixing ratio within this range.

Moreover, a lower limit of the content of the disproportionation inhibitor is not especially limited, but one example of a representative lower limit is 1.2 mass % or more of the refrigerant related component total amount. One example of the upper limit when the haloalkane is used as the disproportionation inhibitor is 1 mass %. However, in the present disclosure, since the haloalkane is used together with the fluoroalkane, the lower limit of the total content of the disproportionation inhibitor (the lower limit of the sum of the content of the fluoroalkane and the content of the haloalkane) may be 1.2 mass % or more.

Although it depends on conditions, even when the total amount of disproportionation inhibitor (the total content of the disproportionation inhibitor) is less than 1.2 mass %, the effect of suppressing the disproportionation reaction and the like can be obtained. However, when the total amount of disproportionation inhibitor is 1.2 mass % or more, the effect of suppressing the disproportionation reaction and the like can be realized more suitably. Therefore, in the present disclosure, one example of a more preferable range of the content of the disproportionation inhibitor is a range of 1.2 mass % or more and 40 mass % or less of the refrigerant related component total amount.

Moreover, generally, in the working medium for the refrigeration cycle, the content of impurities included in the refrigerant component is 2 to 3 mass % or less in many cases. For example, it is known that the purity of a commercial product of 1,1,2-trifluoroethylene that is a representative fluoroolefin is about 97 mass %. Examples of the impurities included in the commercial product include a residue and byproduct of a synthetic raw material, and the content of the impurities included is less than 3 mass %. In the present disclosure, a lower limit of the content of the disproportionation inhibitor may be not less than the content of the impurities of the commercial product, i.e., 3 mass % or more.

The amount of disproportionation inhibitor added can be adjusted depending on conditions, and therefore, may not be necessarily specified. Thus, the upper limit, the lower limit, and the like of the content of the disproportionation inhibitor are merely representative and preferable examples.

The content of the difluoromethane that is the sub-refrigerant component in the working medium for the refrigeration cycle is not especially limited. As described above, in the present disclosure, the fluoroolefin is the main refrigerant component. Therefore, in the working medium for the refrigeration cycle according to the present disclosure, the content of the fluoroolefin may be larger than the content of the difluoromethane.

In the working medium for the refrigeration cycle according to the present disclosure, it is important to lower the GWP as much as possible. Specifically, the GWP is desirably 200 or less (GWP ≤ 200) and is more desirably 150 or less (GWP ≤ 150). When the fluoroolefin and the difluoromethane are used together as the refrigerant component, the upper limit of the content of the difluoromethane may be 30 mass % or less of the refrigerant related component total amount, 25 mass % or less of the refrigerant related component total amount, or 20 mass % or less of the refrigerant related component total amount.

When the content of the difluoromethane is 30 mass % or less, the GWP of the working medium for the refrigeration cycle can be set to 200 or less. When the content of the difluoromethane is 20 mass % or less, the GWP of the working medium for the refrigeration cycle can be set to 150 or less. The lower limit of the difluoromethane is not especially limited. In the working medium for the refrigeration cycle according to the present disclosure, the difluoromethane does not have to be included, and therefore, the content of the difluoromethane may be 0 mass % or more.

### Other Components That May be Used Together

Since the working medium for the refrigeration cycle according to the present disclosure is used in the refrigeration cycle system, the working medium for the refrigeration cycle can be used together with lubricating oil (freezer oil) that lubricates a compressor included in the refrigeration cycle system.

As described above, in the working medium for the refrigeration cycle according to the present disclosure, the fluoroolefin (1,1,2-trifluoroethylene, for example) that causes the disproportionation reaction and the difluoromethane are used together as the refrigerant component, and at least the fluoroalkane may be used as the disproportionation inhibitor. Moreover, when the working medium for the refrigeration cycle is used together with the lubricating oil, a working medium-containing composition can be regarded as being constituted by the refrigerant component, the disproportionation inhibitor, a lubricating oil component, and other components. In the working medium for the refrigeration cycle according to the present disclosure, the disproportionation inhibitor is typically mixed with the refrigerant component but may be mixed with the lubricating oil component depending on the situation.

As the lubricating oil component included in the working medium-containing composition (the lubricating oil component used together with the working medium for the refrigeration cycle), various types of known lubricating oil can be suitably used in the refrigeration cycle system. Specific examples of the lubricating oil include ester lubricating oil, ether lubricating oil, glycol lubricating oil, alkylbenzene lubricating oil, fluorine lubricating oil, mineral oil, and hydrocarbon synthetic oil. However, the lubricating oil is not especially limited. Only one type of lubricating oil may be used, or a suitable combination of two or more types of lubricating oil may be used.

Moreover, various known additives other than the disproportionation inhibitor may be added to the working medium-containing composition. Specific examples of the additives include an oxidation inhibitor, a moisture scavenger, a metal deactivator, an abrasion preventing agent, and an antifoaming agent. However, the additive is not especially limited. The oxidation inhibitor is used to improve heat stability, oxidation resistance, chemical stability, and the like of the refrigerant component or the lubricating oil. The moisture scavenger is used to, when moisture enters the refrigeration cycle system, remove the moisture and especially suppress a property change of the lubricating oil. The metal deactivator is used to suppress or prevent a chemical reaction caused by catalysis of a metal component. The abrasion preventing agent is used to reduce wear at a slide portion in the compressor, especially wear during an operation in which pressure is high. The antifoaming agent is used to especially suppress the generation of air bubbles in the lubricating oil.

Specific types of additives are not especially limited, and a known compound and the like may be suitably used depending on conditions. Moreover, as the additive, only one type of compound or the like may be used, or a suitable combination of two or more types of compounds or the like may be used. Furthermore, the amount of additive added is not especially limited. A known amount of additive may be added as long as the property of the working medium for the refrigeration cycle according to the present disclosure is not spoiled, or the property of the working medium-containing composition including the working medium for the refrigeration cycle is not spoiled.

The working medium for the refrigeration cycle according to the present disclosure may not include the other components. For example, Examples below describe the working medium for the refrigeration cycle in which the 1,1,2-trifluoroethylene among the fluoroolefins is used as the refrigerant component, and the fluoropropane among the fluoroalkanes is used as the disproportionation inhibitor (Examples 1 to 4). This working medium for the refrigeration cycle is constituted only by the fluoroolefin and the fluoroalkane.

Or, Example below describes the working medium for the refrigeration cycle in which the 1,1,2-trifluoroethylene and the difluoromethane are used as the refrigerant component, and the fluoropropane and the difluoroiodomethane are used as the disproportionation inhibitor (Example 5). In this working medium for the refrigeration cycle, the fluoroolefin that is the main refrigerant component and the difluoromethane that is the sub-refrigerant component are used together, and the fluoroalkane that is the main disproportionation inhibitor and the haloalkane that is the sub-disproportionation inhibitor are used together. However, the other components are not included.

Or, the working medium for the refrigeration cycle according to the present disclosure may include: as the refrigerant component, only the fluoroolefin that is the main refrigerant component; and as the disproportionation inhibitor, the fluoroalkane that is the main disproportionation inhibitor and the haloalkane that is the sub-disproportionation inhibitor. Or, the working medium for the refrigeration cycle may include: as the refrigerant component, the fluoroolefin that is the main refrigerant component and the difluoromethane that is the sub-refrigerant component; and as the disproportionation inhibitor, only the fluoroalkane that is the main disproportionation inhibitor.

### Configuration Example of Refrigeration Cycle System

Next, one example of the refrigeration cycle system constituted by using the working medium for the refrigeration cycle according to the present disclosure will be described with reference to FIGS. 1A and 1B.

A specific configuration of the refrigeration cycle system according to the present disclosure is not especially limited and may be such a configuration that elements, such as a compressor, a condenser, an expander, and a vaporizer, are connected to each other through a pipe. Specific application examples of the refrigeration cycle system according to the present disclosure are not especially limited and include air conditioning equipment (air conditioner), a refrigerator (home use, business use), a dehumidifier, a showcase, an ice maker, a heat pump water heater, a heat pump washing/drying machine, and a vending machine.

The air conditioning equipment will be described as a representative application example of the refrigeration cycle system according to the present disclosure. Specifically, as schematically shown in a block diagram of FIG. 1A, air conditioning equipment 10 according to the present embodiment includes indoor equipment 11, outdoor equipment 12, and a pipe 13 connecting the indoor equipment 11 and the outdoor equipment 12. The indoor equipment 11 includes a heat exchanger 14, and the outdoor equipment 12 includes a heat exchanger 15, a compressor 16, and a decompressor 17.

The heat exchanger 14 of the indoor equipment 11 and the heat exchanger 15 of the outdoor equipment 12 are annularly connected to each other by the pipe 13, and this forms the refrigeration cycle. Specifically, the heat exchanger 14 of the indoor equipment 11, the compressor 16, the heat exchanger 15 of the outdoor equipment 12, and the decompressor 17 are annularly connected to each other in this order by the pipe 13. Moreover, a four-way valve 18 for switching between cooling and heating is located at the pipe 13 that connects the heat exchanger 14, the compressor 16, and the heat exchanger 15 to each other. The indoor equipment 11 includes a fan, a temperature sensor, an operating device, and the like which are not shown, and the outdoor equipment 12 includes a blower, an accumulator, and the like which are not shown. Furthermore, various valve devices (including the four-way valve 18), a strainer, and the like which are not shown are located at the pipe 13.

The heat exchanger 14 included in the indoor equipment 11 performs heat exchange between indoor air taken into the indoor equipment 11 by the fan and a refrigerant flowing inside the heat exchanger 14. At the time of the heating, the indoor equipment 11 sends air, which has been heated by the heat exchange, to an indoor side. At the time of the cooling, the indoor equipment 11 sends air, which has been cooled by the heat exchange, to the indoor side. The heat exchanger 15 included in the outdoor equipment 12 performs heat exchange between outside air taken into the outdoor equipment 12 by the blower and a refrigerant flowing inside the heat exchanger 15.

Specific elements of the indoor equipment 11 and the outdoor equipment 12 or specific elements, such as the heat exchanger 14, the heat exchanger 15, the compressor 16, the decompressor 17, the four-way valve 18, the fan, the temperature sensor, the operating device, the blower, the accumulator, the other valve devices, and the strainer, are not especially limited, and known elements can be suitably used.

One example of the operation of the air conditioning equipment 10 shown in FIG. 1A will be specifically described. First, in a cooling operation or a dehumidifying operation, the compressor 16 of the outdoor equipment 12 compresses and discharges a gas refrigerant, and thus, the gas refrigerant is sent through the four-way valve 18 to the heat exchanger 15 of the outdoor equipment 12. Since the heat exchanger 15 performs the heat exchange between the outside air and the gas refrigerant, the gas refrigerant condenses into liquid. This liquid refrigerant is decompressed by the decompressor 17 and is sent to the heat exchanger 14 of the indoor equipment 11. In the heat exchanger 14, the liquid refrigerant vaporizes by the heat exchange with the indoor air to become the gas refrigerant. This gas refrigerant returns through the four-way valve 18 to the compressor 16 of the outdoor equipment 12. The compressor 16 compresses the gas refrigerant and discharges the gas refrigerant through the four-way valve 18 to the heat exchanger 15 again.

Moreover, in a heating operation, the compressor 16 of the outdoor equipment 12 compresses and discharges the gas refrigerant, and thus, the gas refrigerant is sent through the four-way valve 18 to the heat exchanger 14 of the indoor equipment 11. In the heat exchanger 14, the gas refrigerant condenses into liquid by the heat exchange with the indoor air. This liquid refrigerant is decompressed by the decompressor 17 to become a gas-liquid two-phase refrigerant, and the gas-liquid two-phase refrigerant is sent to the heat exchanger 15 of the outdoor equipment 12. Since the heat exchanger 15 performs the heat exchange between the outside air and the gas-liquid two-phase refrigerant, the gas-liquid two-phase refrigerant vaporizes to become the gas refrigerant, and the gas refrigerant returns to the compressor 16. The compressor 16 compresses the gas refrigerant and discharges the gas refrigerant through the four-way valve 18 to the heat exchanger 14 of the indoor equipment 11 again.

Moreover, a refrigerator will be described as another representative application example of the refrigeration cycle system according to the present disclosure. Specifically, for example, as schematically shown in a block diagram of FIG. 1B, a refrigerator 20 according to the present embodiment includes a compressor 21, a condenser 22, a decompressor 23, a vaporizer 24, a pipe 25, and the like which are shown in FIG. 1A. Moreover, although not shown, the refrigerator 20 further includes a casing as a main body, a blower, an operating device, a controller, and the like.

The compressor 21 compresses a refrigerant gas to generate a high-temperature high-pressure gas refrigerant. The condenser 22 cools the refrigerant to liquefy the refrigerant. The decompressor 23 is constituted by, for example, a capillary tube and decompresses the liquefied refrigerant (liquid refrigerant). The vaporizer 24 vaporizes the refrigerant to generate a low-temperature low-pressure gas refrigerant. The compressor 21, the condenser 22, the decompressor 23, and the vaporizer 24 are annularly connected to each other in this order by the pipe 25 through which the refrigerant gas flows. Thus, the refrigeration cycle is configured.

Elements, such as the compressor 21, the condenser 22, the decompressor 23, the vaporizer 24, the pipe 25, the main body casing, the blower, the operating device, and the controller, are not especially limited, and known elements can be suitably used. Moreover, the refrigerator 20 may include known elements other than the above elements.

One example of the operation of the refrigerator 20 shown in FIG. 1B will be specifically described. The compressor 21 compresses the gas refrigerant and discharges the gas refrigerant to the condenser 22. The condenser 22 cools the gas refrigerant to generate the liquid refrigerant. The liquid refrigerant is decompressed by passing through the decompressor 23, and is then sent to the vaporizer 24. In the vaporizer 24, the liquid refrigerant takes heat from surroundings to vaporize and become the gas refrigerant, and the gas refrigerant returns to the compressor 21. The compressor 21 compresses the gas refrigerant and discharges the refrigerant to the condenser 22 again.

Each of the air conditioning equipment 10 and the refrigerator 20 is the refrigeration cycle system configured by using the above-described working medium for the refrigeration cycle. The fluoroolefin used in the working medium for the refrigeration cycle has a satisfactory property as the refrigerant component and has a low ODP and a low GWP. In addition, the working medium for the refrigeration cycle includes, as the disproportionation inhibitor, at least the fluoroalkane having the boiling point of 0°C or less and the carbon number of 1 to 3.

Therefore, the disproportionation reaction of the fluoroolefin can be effectively suppressed, and the combustion speed of the working medium for the refrigeration cycle can be lowered, and therefore, the combustibility can be suppressed. Thus, the refrigeration cycle system which can reduce influence on environment, is efficient, and excels in the practical use can be realized.

### Examples

The present disclosure will be further specifically described based on Examples, Comparative Examples, and Reference Example. However, the present disclosure is not limited to these. A skilled person can make various modifications, corrections, and alterations within the scope of the present disclosure.

### Experimental System of Disproportionation Reaction

A pressure sensor, a thermocouple, and an electric discharger were attached to a sealed pressure-resistant container (internal volume of 50 mL). The pressure sensor measures internal pressure in the pressure-resistant container. The thermocouple measures an internal temperature in the pressure-resistant container. The electric discharger generates electric discharge in the pressure-resistant container.

Moreover, a gas bomb (HFO1123 gas bomb) of 1,1,2-trifluoroethylene (including 5% of limonene (liquid phase) as a stabilizer) that was the refrigerant component was connected to the pressure-resistant container such that the pressure of the 1,1,2-trifluoroethylene was adjustable.

Or, when the difluoromethane as the subcomponent was included as the refrigerant component together with the 1,1,2-trifluoroethylene that was the main component, in addition to the above HFO1123 gas bomb, a gas bomb (R32 gas bomb) of the difluoromethane was connected to the pressure-resistant container such that the pressure of the difluoromethane was adjustable.

Two mantle heaters were located so as to heat the entire pressure-resistant container to which these gas bombs were connected, and a ribbon heater was located so as to be able to heat a pipe portion.

The pressure sensor and the thermometer which were attached to the pressure-resistant container were connected to a data logger. Thus, an experimental system for the disproportionation reaction was constructed.

### Reference Example

In the above experimental system, the 1,1,2-trifluoroethylene was introduced from the HFO1123 gas bomb into the pressure-resistant container. Therefore, in the working medium for the refrigeration cycle in the pressure-resistant container, the content of the 1,1,2-trifluoroethylene was 100 mass %.

To induce the disproportionation reaction of the 1,1,2-trifluoroethylene, the electric discharger generated electric discharge at a discharge voltage of 300 V under a high-temperature high-pressure condition in which the internal temperature was 150°C, and the internal pressure was 2.0 MPa. Then, after the internal pressure and the internal temperature adequately lowered, the inside of the pressure-resistant container was confirmed. As a result, the generation of a considerable amount of soot was confirmed.

### Comparative Example 1

In the above experimental system, in addition to the HFO1123 gas bomb, a gas bomb of propane (R290) was connected to the pressure-resistant container such that the pressure of the propane was adjustable. The 1,1,2-trifluoroethylene was introduced from the HFO1123 gas bomb into the pressure-resistant container, and the amount of propane introduced as the disproportionation inhibitor was adjusted such that the content of the propane became 15 mass % (24.7 volume %). It should be noted that the combustion speed of the propane is 38.7 cm/s.

Then, as with Reference Example, the occurrence of the disproportionation reaction of the 1,1,2-trifluoroethylene was confirmed. As a result, even though the electric discharge was repeatedly performed five times or more, a significant pressure increase and a significant temperature increase were not observed.

### Comparative Example 2

In the above experimental system, the 1,1,2-trifluoroethylene was introduced from the HFO1123 gas bomb into the pressure-resistant container, and as with Comparative Example 1, the propane as the disproportionation inhibitor was introduced such that the content of the propane became 20 mass % (31.7 volume %).

Then, the occurrence of the disproportionation reaction of the 1,1,2-trifluoroethylene was confirmed in the same manner as Reference Example except that the discharge voltage was 100 V. As a result, even though the electric discharge was repeatedly performed five times or more, a significant pressure increase and a significant temperature increase were not observed.

### Comparative Example 3

In the above experimental system, the 1,1,2-trifluoroethylene was introduced from the HFO1123 gas bomb into the pressure-resistant container, and as with Comparative Example 2, the propane as the disproportionation inhibitor was introduced such that the content of the propane became 20 mass % (31.7 volume %).

Then, the occurrence of the disproportionation reaction of the 1,1,2-trifluoroethylene was confirmed in the same manner as Reference Example (discharge voltage of 300 V). As a result, even though the electric discharge was repeatedly performed five times or more, a significant pressure increase and a significant temperature increase were not observed.

### Example 1

In the above experimental system, the 1,1,2-trifluoroethylene was introduced from the HFO1123 gas bomb into the pressure-resistant container, and the 1-fluoropropane as the disproportionation inhibitor was added such that the content of the 1-fluoropropane became 20 mass % (24.8 volume %). It should be noted that the combustion speed of the 1-fluoropropane is 35.0 cm/s.

Then, the occurrence of the disproportionation reaction of the 1,1,2-trifluoroethylene was confirmed in the same manner as Reference Example except that the discharge voltage was 100 V. As a result, even though the electric discharge was repeatedly performed five times or more, a significant pressure increase and a significant temperature increase were not observed.

### Example 2

In the above experimental system, the 1,1,2-trifluoroethylene was introduced from the HFO1123 gas bomb into the pressure-resistant container, and the 1-fluoropropane as the disproportionation inhibitor was added such that the content of the 1-fluoropropane became 20 mass % (24.8 volume %).

Then, the occurrence of the disproportionation reaction of the 1,1,2-trifluoroethylene was confirmed in the same manner as Reference Example (discharge voltage of 300 V). As a result, even though the electric discharge was repeatedly performed five times or more, a significant pressure increase and a significant temperature increase were not observed.

### Example 3

In the above experimental system, the 1,1,2-trifluoroethylene was introduced from the HFO1123 gas bomb into the pressure-resistant container, and the 2-fluoropropane as the disproportionation inhibitor was added such that the content of the 2-fluoropropane became 20 mass % (24.8 volume %). It should be noted that the combustion speed of the 2-fluoropropane is 31.8 cm/s.

Then, the occurrence of the disproportionation reaction of the 1,1,2-trifluoroethylene was confirmed in the same manner as Reference Example except that the discharge voltage was 100 V. As a result, even though the electric discharge was repeatedly performed five times or more, a significant pressure increase and a significant temperature increase were not observed.

### Example 4

In the above experimental system, the 1,1,2-trifluoroethylene was introduced from the HFO1123 gas bomb into the pressure-resistant container, and the 2-fluoropropane as the disproportionation inhibitor was added such that the content of the 2-fluoropropane became 20 mass % (24.8 volume %).

Then, the occurrence of the disproportionation reaction of the 1,1,2-trifluoroethylene was confirmed in the same manner as Reference Example (discharge voltage of 300 V). As a result, even though the electric discharge was repeatedly performed five times or more, a significant pressure increase and a significant temperature increase were not observed.

### Comparative Example 4

In the above experimental system, in addition to the HFO1123 gas bomb and the R32 gas bomb, a gas bomb of propane was connected to the pressure-resistant container such that the pressure of the propane was adjustable. The 1,1,2-trifluoroethylene, the difluoromethane, and the propane were introduced from these gas bombs into the pressure-resistant container, and the difluoroiodomethane was added as the disproportionation inhibitor.

Thus, obtained was a gas composition (the working medium for the refrigeration cycle) in which: the content of the 1,1,2-trifluoroethylene was 69.5 mass % (58.6 volume %); the content of the difluoromethane was 22.0 mass % (29.2 volume %); the content of the propane was 7.5 mass % (11.8 volume %); and the content of the difluoroiodomethane was 1.0 mass % (0.4 volume %).

Then, the occurrence of the disproportionation reaction of the 1,1,2-trifluoroethylene was confirmed in the same manner as Reference Example (discharge voltage of 300 V). As a result, even though the electric discharge was repeatedly performed five times or more, a significant pressure increase and a significant temperature increase were not observed.

### Example 5

In order to obtain a gas composition which is the same as the gas composition according to Comparative Example 4 except that the propane was replaced with the 2-fluoropropane, in the experimental system, the 1,1,2-trifluoroethylene and the difluoromethane were introduced into the pressure-resistant container, and the difluoroiodomethane and the 2-fluoropropane were further introduced.

In order to set the combustibility of the gas composition according to Example 5 to be equal to the combustibility of the gas composition according to Comparative Example 4 (A2L), the amount of 2-fluoropropane added was adjusted to 10.0 mass %.

Therefore, the gas composition (the working medium for the refrigeration cycle) according to Example 5 was such a composition that: the content of the 1,1,2-trifluoroethylene was 67.0 mass % (58.1 volume %); the content of the difluoromethane was 22.0 mass % (30.1 volume %); the content of the 2-fluoropropane was 10.0 mass % (11.4 volume %); and the content of the difluoroiodomethane was 1.0 mass % (0.4 volume %).

Then, the occurrence of the disproportionation reaction of the 1,1,2-trifluoroethylene was confirmed in the same manner as Reference Example (discharge voltage of 300 V). As a result, even though the electric discharge was repeatedly performed five times or more, a significant pressure increase and a significant temperature increase were not observed.

### Comparisons between Examples and Comparative Examples

As is clear from comparisons between Examples 1 to 4 and Comparative Examples 1 to 4, even when the disproportionation inhibitor is the 1-fluoropropane (Examples 1 and 2) or the 2-fluoropropane (Examples 3 and 4) in a case where the refrigerant component is only the 1,1,2-trifluoroethylene, the disproportionation reaction of the 1,1,2-trifluoroethylene can be effectively suppressed as with a conventional case where the propane (Comparative Examples 1 to 3) is used.

It is clear that since each of the combustion speed of the 1-fluoropropane and the combustion speed of the 2-fluoropropane is lower than the combustion speed of the propane, the combustibility of each of the gas compositions obtained in Examples 1 to 5 can be satisfactorily suppressed, i.e., the combustibility of the working medium for the refrigeration cycle according to the present disclosure can be satisfactorily suppressed.

Moreover, as is clear from a comparison between Example 5 and Comparative Example 5, even when two types of refrigerant components that are the 1,1,2-trifluoroethylene and the difluoromethane are used, and the difluoroiodomethane is used together with the 2-fluoropropane as the disproportionation inhibitors (Example 5), the disproportionation reaction of the 1,1,2-trifluoroethylene can be effectively suppressed as with a conventional case where the propane and the difluoroiodomethane are used together (Comparative Example 5).

As described above, the combustion speed of the 2-fluoropropane is lower than the combustion speed of the propane, and in addition, a large amount of 2-fluoropropane is added in Example 5 in accordance with the combustibility of the gas composition according to Comparative Example 5. However, the gas composition according to Example 5 has obtained the similar result to the gas composition according to Comparative Example 5.

As is clear from Examples 1 to 4, when each of the 1-fluoropropane and the 2-fluoropropane is the same in mass as the propane, each of the 1-fluoropropane and the 2-fluoropropane can suppress the disproportionation reaction of the 1, 1,2-fluoroethylene as with the propane. Therefore, even when the mass content of the 2-fluoropropane in the gas composition according to Example 5 is reduced to be the same (7.5 mass %) as the mass content of the propane in the gas composition according to Comparative Example 5, the similar effect of suppressing the disproportionation reaction is obtained. Thus, the combustibility of the gas composition according to Example 5 can be satisfactorily suppressed, i.e., the combustibility of the working medium for the refrigeration cycle according to the present disclosure can be satisfactorily suppressed.

The present invention is not limited to the above-described embodiment and may be modified in various ways within the scope of the claims, and embodiments obtained by suitably combining technical means disclosed in different embodiments and/or plural modified examples are included in the technical scope of the present invention.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Additional Information

The present description discloses the technologies by the above embodiments.

### First Technology

A working medium for a refrigeration cycle,
the working medium including:
as a refrigerant component, fluoroolefin that causes a disproportionation reaction; and
as a disproportionation inhibitor that suppresses the disproportionation reaction of the fluoroolefin, fluoroalkane (except for difluoromethane) having a boiling point of 0°C or less and a carbon number of 1 to 3.

### Second Technology

The working medium for the refrigeration cycle according to the first technology, wherein the fluoroalkane includes at least one of fluoroethane having the carbon number of 2 and fluoropropane having the carbon number of 3.

### Third Technology

The working medium for the refrigeration cycle according to the first or second technology, further including difluoromethane (R32) as the refrigerant component.

### Fourth Technology

The working medium for the refrigeration cycle according to any one of the first to third technologies, further including, as the disproportionation inhibitor, haloalkane that has the carbon number of 1 or 2 and is not a compound in which all halogen atoms are fluorine.

### Fifth Technology

The working medium for the refrigeration cycle according to the fourth technology, wherein the haloalkane is
haloethane (except for a compound in which halogen atoms X are only fluorine F) having a structure represented by Formula (1) below,

   C₂HₘXₙ ... (1)
(where X denotes halogen atoms selected from the group consisting of F, Cl, Br, and I, m is an integer of 0 or more, n is an integer of 1 or more, the sum of m and n is 6, and when n is 2 or more, the halogen atoms X are the same in type as each other or different in type from each other) or
halomethane (except for a compound in which halogen atoms X are only fluorine F) having a structure represented by Formula (2) below,

   CHₚX_{q} ... (2)
(where X denotes halogen atoms selected from the group consisting of F, Cl, Br, and I, p is an integer of 0 or more, q is an integer of 1 or more, the sum of p and q is 4, and when q is 2 or more, the halogen atoms X are the same in type as each other or different in type from each other).

### Sixth Technology

The working medium for the refrigeration cycle according to any one of the first to fifth technologies, wherein when the sum of the amount of refrigerant component and the amount of disproportionation inhibitor is regarded as 100 mass %, the content of the fluoroalkane is 30 mass % or less.

### Seventh Technology

The working medium for the refrigeration cycle according to any one of the third to fifth technologies, wherein when the sum of the amount of refrigerant component and the amount of disproportionation inhibitor is regarded as 100 mass %, the content of the difluoromethane is 30 mass % or less.

### Eighth Technology

The working medium for the refrigeration cycle according to any one of the fourth to seventh technologies, wherein when the sum of the amount of refrigerant component and the amount of disproportionation inhibitor is 100 mass %, the content of the haloalkane is 10 mass % or less.

### Ninth Technology

The working medium for the refrigeration cycle according to any one of the first to eighth technologies, wherein:
the fluoroolefin that causes the disproportionation reaction is 1,1,2-trifluoroethylene or difluoroethylene; and
the fluoroalkane is fluoropropane.

### Tenth Technology

The working medium for the refrigeration cycle according to any one of the fourth to ninth technologies, wherein the haloalkane includes at least one of difluoroiodomethane, 1,1,1-trifluoro-2-iodoethane, and trifluoroiodomethane.

### Eleventh Technology

A refrigeration cycle system configured by using the working medium for the refrigeration cycle according to any one of the first to tenth technologies.

### Industrial Applicability

The present invention can be suitably used in the field of a working medium used for a refrigeration cycle, and in addition, can be widely and suitably used in the field of a refrigeration cycle system, such as air conditioning equipment (air conditioner), a refrigerator (home use, business use), a dehumidifier, a showcase, an ice maker, a heat pump water heater, a heat pump washing/drying machine, or a vending machine.

### Reference Signs List

- 10: air conditioning equipment (refrigeration cycle system)
- 11: indoor equipment
- 12: outdoor equipment
- 13: pipe
- 14: heat exchanger
- 15: heat exchanger
- 16: compressor
- 17: decompressor
- 18: four-way valve
- 20: refrigerator (refrigeration cycle system)
- 21: compressor
- 22: condenser
- 23: decompressor
- 24: vaporizer
- 25: pipe

## Claims

1. A working medium for a refrigeration cycle,
the working medium comprising:
as a refrigerant component, fluoroolefin that causes a disproportionation reaction; and
as a disproportionation inhibitor that suppresses the disproportionation reaction of the fluoroolefin, fluoroalkane (except for difluoromethane) having a boiling point of 0°C or less and a carbon number of 1 to 3.

2. The working medium for the refrigeration cycle according to claim 1, wherein the fluoroalkane includes at least one of fluoroethane having the carbon number of 2 and fluoropropane having the carbon number of 3.

3. The working medium for the refrigeration cycle according to claim 1 or 2, further comprising difluoromethane (R32) as the refrigerant component.

4. The working medium for the refrigeration cycle according to claim 1 or 2, further comprising, as the disproportionation inhibitor, haloalkane that has the carbon number of 1 or 2 and is not a compound in which all halogen atoms are fluorine.

5. The working medium for the refrigeration cycle according to claim 4, wherein the haloalkane is
haloethane (except for a compound in which halogen atoms X are only fluorine F) having a structure represented by Formula (1) below,
C₂HₘXₙ ... (1)
(where X denotes halogen atoms selected from the group consisting of F, Cl, Br, and I, m is an integer of 0 or more, n is an integer of 1 or more, the sum of m and n is 6, and when n is 2 or more, the halogen atoms X are the same in type as each other or different in type from each other) or
halomethane (except for a compound in which halogen atoms X are only fluorine F) having a structure represented by Formula (2) below,
CHₚX_{q} ... (2)
(where X denotes halogen atoms selected from the group consisting of F, Cl, Br, and I, p is an integer of 0 or more, q is an integer of 1 or more, the sum of p and q is 4, and when q is 2 or more, the halogen atoms X are the same in type as each other or different in type from each other).

6. The working medium for the refrigeration cycle according to claim 1 or 2, wherein when the sum of the amount of refrigerant component and the amount of disproportionation inhibitor is regarded as 100 mass %, the content of the fluoroalkane is 30 mass % or less.

7. The working medium for the refrigeration cycle according to claim 3, wherein when the sum of the amount of refrigerant component and the amount of disproportionation inhibitor is regarded as 100 mass %, the content of the difluoromethane is 30 mass % or less.

8. The working medium for the refrigeration cycle according to claim 4, wherein when the sum of the amount of refrigerant component and the amount of disproportionation inhibitor is 100 mass %, the content of the haloalkane is 10 mass % or less.

9. The working medium for the refrigeration cycle according to claim 1 or 2, wherein:
the fluoroolefin that causes the disproportionation reaction is 1,1,2-trifluoroethylene or difluoroethylene; and
the fluoroalkane is fluoropropane.

10. The working medium for the refrigeration cycle according to claim 4, wherein the haloalkane includes at least one of difluoroiodomethane, 1,1,1-trifluoro-2-iodoethane, and trifluoroiodomethane.

11. A refrigeration cycle system configured by using the working medium for the refrigeration cycle according to claim 1 or 3.
